# FASCICULE DE BREVET EUROPEEN

(11) **EP 2 444 774 B1**
(45) Date de publication et mention de la délivrance du brevet: **05.07.2017**
(21) Numéro de dépôt: 11185629.0
(22) Date de dépôt: 18.10.2011
(51) Int. Cl.: G01C 19/56, G01C 21/16, G01P 15/18

(54) **Dispositif inertiel comportant des capteurs inertiels de précisions différentes**
Trägheitsvorrichtung, die Trägheitssensoren verschiedener Präzision enthält
Inertia device comprising inertia sensors with different levels of precision

(30) Priorité: 22.10.2010 FR 1058677
(43) Date de publication de la demande: 25.04.2012
(73) Titulaire: Safran Electronics & Defense, 92100 Boulogne-Billancourt (FR)
(72) Inventeur: Delhaye, Fabrice, 92100 BOULOGNE-BILLANCOURT (FR); Goudon, Jean-Claude, 92100 BOULOGNE-BILLANCOURT (FR)
(74) Mandataire: Lavialle, Bruno François Stéphane

(56) Documents cités:
- EP-A1- 0 686 830
- EP-A2- 1 887 365
- WO-A2-03/017504
- US-A- 5 610 337
- US-A1- 2008 039 992

## Description

La présente invention concerne un dispositif inertiel tel que ceux implantés dans les systèmes avioniques embarqués sur les aéronefs pour notamment déterminer l'attitude de l'aéronef.

Un tel dispositif inertiel comprend des capteurs inertiels reliés à une unité de commande et montés sur une plateforme fixée à l'aéronef. Les capteurs inertiels comportent des accéléromètres et des capteurs angulaires, tels que des gyromètres, positionnés selon des axes d'un repère de référence défini de telle manière que l'un au moins des axes s'étendent selon la verticale.

Les capteurs inertiels fournissent à l'unité de commande des signaux qui sont traités pour fournir à une unité de pilotage de l'aéronef des données relative à l'attitude de l'aéronef, c'est-à-dire son orientation par rapport aux axes du repère de référence ou d'un autre repère dans lequel lesdites orientations ont été projetées.

Lorsque les signaux des capteurs inertiels sont utilisés uniquement pour déterminer l'attitude de l'aéronef, seules les performances à court terme des capteurs inertiels sont considérées. Pour des raisons de coût, on recourt donc généralement à des capteurs inertiels bas de gamme dont les performances à court terme sont, d'une manière générale, suffisantes pour cette application.

Dans une autre application, les signaux inertiels sont utilisés également pour maintenir un cap de l'aéronef. Après une phase d'alignement au cours de laquelle la direction du Nord est déterminée, les signaux du dispositif inertiel sont utilisés pour maintenir l'aéronef sur un cap à suivre pendant toute la durée du vol. Dans cette application, les performances à court terme ne sont pas les seules prises en compte. En effet, les performances à long terme des capteurs inertiels doivent être suffisantes pour éviter une dérive du dispositif inertiel par rapport au cap à suivre. Les capteurs inertiels utilisés sont généralement des capteurs moyens de gamme.

Les dispositifs inertiels connus pour cette dernière application sont donc en général plus coûteux que les dispositifs inertiels utilisés simplement pour déterminer l'attitude de l'appareil.

Ceci oblige les constructeurs d'aéronefs à disposer des deux types de dispositifs inertiels pour pouvoir équiper leurs aéronefs en fonction des besoins.

Cette situation se révèle relativement coûteuse car elle limite les économies d'échelle. En outre, ceci implique de certifier les deux types de dispositifs inertiels pour avoir le droit de les monter sur des aéronefs, introduisant un surcoût supplémentaire. Enfin, la gestion des stocks notamment aux fins de maintenance est complexe et, elle aussi, coûteuse.

Un but de l'invention est de fournir un dispositif plus économique tout en conservant les fonctionnalités et performances des dispositifs inertiels utilisés par le passé dans ces deux applications.

L'invention résulte d'une approche opposée à l'approche traditionnelle en matière de conception de dispositifs inertiels.

En effet, selon cette approche traditionnelle, les capteurs inertiels doivent avoir la même classe de précision, quel que soit l'axe selon lequel ils sont positionnés. Par classe de précision, on entend le rapport entre l'erreur maximale et l'étendue de mesure, étant entendu que plus la classe de précision est basse et plus le dispositif inertiel est proche du haut de gamme.

Or, dans l'application de maintien de cap, le capteur inertiel devant présenter les meilleures performances à long terme est celui positionné selon l'axe vertical.

Selon l'invention, le dispositif inertiel comporte une unité de commande reliée à au moins trois capteurs inertiels ayant chacun au moins un axe sensible, les axes sensibles étant alignés chacun sur un axe d'un repère de référence, chaque capteur ayant une classe de précision prédéterminée, caractérisé en ce que les classe de précision d'au moins deux des capteurs sont différentes l'une de l'autre.

Dans le dispositif inertiel de l'invention, au moins un des capteurs inertiels a une classe de précision inférieure à celle des autres capteurs inertiels. Ce capteur inertiel peut dès lors être positionné sur l'axe requérant les meilleures performances. Ainsi, un constructeur d'aéronefs peut disposer d'un stock de dispositifs inertiels d'un type unique utilisables à la fois pour des applications basiques et avec maintien de cap. Ceci permet de réaliser des économies d'échelles et de limiter les coûts de logistique et de certification.

Selon un mode de réalisation particulier, les capteurs inertiels sont des capteurs angulaires et, de préférence, un des axes étant un axe vertical, le capteur de classe de précision la plus faible est monté sur l'axe vertical du repère.

Ce dispositif inertiel est particulièrement bien adapté aux applications de maintien de cap. Comme le capteur de classe de précision la plus faible n'est utilisé que pour le maintien de cap et non pour la détermination d'altitude, il doit subir une certification moins sévère que les capteurs de classe de précision supérieure. En effet, ce capteur ne participe pas au pilotage de l'aéronef, de sorte que sa défaillance ne serait pas considérée comme catastrophique.

Avantageusement, le dispositif comporte quatre capteurs inertiels dont un premier capteur inertiel et un deuxième capteur inertiel sont positionnés sur le même axe, la classe de précision du premier capteur inertiel étant inférieure à la classe de précision du deuxième capteur inertiel.

Ainsi, le dispositif peut comprendre trois capteurs inertiels de classe de précision supérieure qui sont utilisés pour la détermination d'attitude et un capteur inertiel de classe de précision inférieure qui est utilisé pour le maintien de cap. Lorsque seule la détermination d'attitude est utilisée, le capteur de classe de précision inférieure peut être omis ou son signal négligé.

De préférence alors, le dispositif comporte un emplacement pour le montage d'un premier capteur inertiel sur un des axes du repère et trois capteurs inertiels fixés selon les axes du repère, l'un des capteurs fixés formant un deuxième capteur inertiel monté sur le même axe que le premier capteur, la classe de précision du premier capteur inertiel étant inférieure à la classe de précision du deuxième capteur inertiel.

Ceci permet de manière simple d'avoir un signal résultant de la fusion des signaux provenant du premier capteur et du deuxième capteur. Comme la détermination d'attitude et le maintien de cap exploitent deux parties distinctes du spectre de fréquence du signal résultant, correspondant chacune à la contribution respective du deuxième capteur et du premier capteur, il n'y a pas de risque que la détermination d'attitude soit affectée négativement par le signal provenant du premier capteur. Les signaux émanant du dispositif peuvent être exploités comme un tout à la fois pour la détermination d'attitude et pour le maintien de cap sans nécessité de prévoir une chaîne d'acquisition et de traitement distincte pour les signaux émanant du premier capteur.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique de la structure d'un dispositif inertiel conforme à un premier mode de réalisation de l'invention,
- la figure 2 est une vue schématique de la structure d'un dispositif inertiel conforme à un deuxième mode de réalisation de l'invention,
- la figure 3 est une vue schématique du circuit de ce dispositif.

L'invention est ici décrite en application à des aéronefs. Le dispositif inertiel de l'invention a, de manière connue en soi, une sortie reliée à une unité de pilotage de l'aéronef qui exploite les signaux du dispositif inertiel pour déterminer l'attitude de l'aéronef en vue de l'afficher sur le tableau de bord et d'assurer si nécessaire le pilotage automatique de l'aéronef. Eventuellement, dans certains aéronefs, les signaux sont utilisés pour maintenir un cap de l'aéronef au cours du vol.

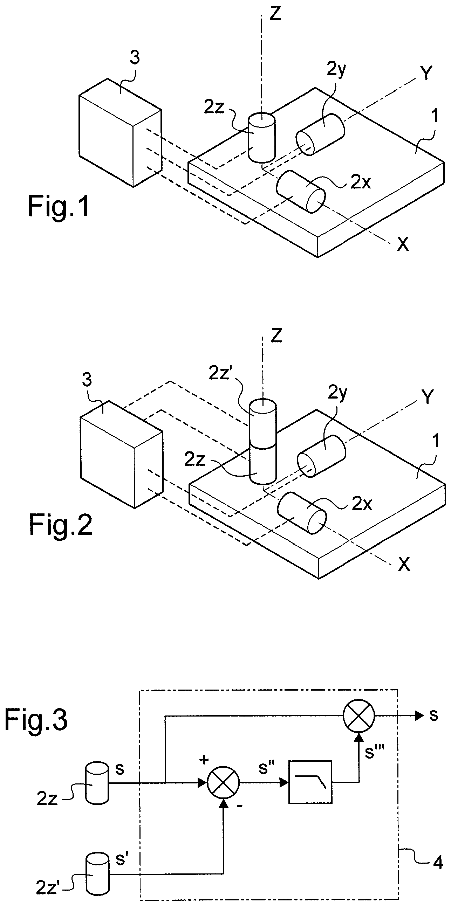

En référence à la figure 1, le dispositif inertiel comporte une plateforme 1 sur laquelle sont montés trois capteurs inertiels, ici des gyromètres 2, disposés chacun pour avoir leur axe sensible aligné sur l'un des axes X, Y, Z d'un repère de référence du dispositif (la référence 2 des gyromètres porte l'indice x, y, z selon l'axe avec lesquels ils sont alignés). L'axe Z est l'axe vertical du repère de référence. La structure générale du dispositif, et notamment la plateforme elle-même et l'agencement des gyromètres 2 sur la plateforme 1, est connu en lui-même et ne sera pas plus décrit ici.

Les gyromètres 2 sont reliés à une unité de commande 3 connue en elle-même.

Les gyromètres 2 ont chacun une classe de précision prédéterminée. Les classes de précision des capteurs 2x et 2y sont différentes de la classe de précision du capteur 2z. Le gyromètre 2z a une classe de précision inférieure à celles des gyromètres 2x, 2y.

On comprend que ce dispositif peut servir à moindre coût à la fois pour les applications nécessitant la détermination d'attitude seule mais aussi pour les applications nécessitant également le maintien de cap. Un constructeur d'aéronefs fabriquant des systèmes avioniques mettant en oeuvre ces deux types d'application peut donc disposer uniquement du dispositif inertiel de l'invention.

Une seule certification aéronautique est nécessaire.

En référence aux figures 2 et 3, et conformément au deuxième mode de réalisation, le dispositif comporte quatre gyromètres 2x, 2y, 2z, 2z'. Les gyromètres 2x, 2y et 2z ont leur axe sensible aligné respectivement avec les axes X, Y, Z. Le gyromètre 2z' a son axe sensible aligné sur l'axe Z.

Les gyromètres 2x, 2y, 2z sont de même classe de précision. Le gyromètres 2z' a une classe de précision inférieure à celle des gyromètres 2x, 2y, 2z.

Les gyromètres 2 sont reliés à une unité de commande 3. L'unité de commande 3 comporte un module de filtrage 4 pour mixer des signaux s et s' provenant respectivement des gyromètres 2z et 2z'. Le filtrage est un filtrage numérique complémentaire. Dans un premier temps, le signal s'est soustrait au signal s pour obtenir un signal s" qui passe dans un filtre pour en éliminer les hautes fréquences. Le signal s"' ainsi obtenu est ajouté au signal s pour obtenir le signal S (voir la figure 3) qui sera utilisé par l'unité de pilotage de l'aéronef.

Bien entendu, l'invention n'est pas limitée aux modes de réalisation décrits mais englobe toute variante entrant dans le champ de l'invention telle que définie par les revendications.

En particulier, le gyromètre 2z' peut être installé dans le même boîtier que les autres gyromètres 2 ou dans un boîtier séparé. Dans ce dernier cas, les boîtiers sont pourvus de moyens de connexion permettant le raccordement du gyromètre 2z' à l'unité de commande 3.

Le dispositif peut comprendre trois capteurs de classe de précision supérieure et un emplacement pour le montage d'un capteur inertiel de classe de précision supérieure de telle manière que le capteur de classe de précision inférieure puisse être monté sur le même axe qu'un des capteurs de classe de précision supérieure. Lorsque que le dispositif est destiné à des applications nécessitant la détermination d'attitude seule, l'emplacement est laissé vide. Lorsque le dispositif est destiné à des applications nécessitant également le maintien de cap, le capteur de classe de précision inférieure est monté dans l'emplacement dédié et relié à l'unité de commande. Dans ce cas, la certification aéronautique est simplifiée car on peut démontrer que le raccordement du capteur de classe de précision inférieure n'entraîne pas une dégradation des performances de la détermination d'attitude au moyen des trois capteurs de classe de précision supérieure.

Les capteurs inertiels de classes de précision différentes peuvent être des capteurs angulaires ou linéaires comme des accéléromètres.

La différence de classes de précision des capteurs inertiels peut résulter de l'utilisation de technologies différentes (capteur de type GRH d'un côté et capteur de type MEM de l'autre côté), de traitements électroniques du signal différents (analogique d'un côté, numérique de l'autre côté ou autre).

Les capteurs inertiels de classes de précision différentes peuvent avoir des domaines de mesure ayant la même étendue ou des étendues différentes.

## Revendications

1. Dispositif inertiel comportant
- une unité de commande (3),
- une plateforme (1),
au moins trois capteurs inertiels (2x, 2y, 2z, 2z') reliés à l'unité de commande (3) et étant montés sur la plateforme (1), les au moins trois capteurs inertiels (2x, 2y, 2z, 2z') ayant chacun au moins un axe sensible, les axes sensibles étant alignés chacun sur un axe d'un repère de référence, chaque capteur ayant une classe de précision prédéterminée, **caractérisé en ce que** les classe de précision d'au moins deux des capteurs sont différentes l'une de l'autre.

2. Dispositif selon la revendication 1, dans lequel les capteurs inertiels sont des capteurs angulaires.

3. Dispositif selon la revendication 2, dans lequel, un des axes étant un axe vertical, le capteur de classe de précision la plus faible est monté sur l'axe vertical du repère.

4. Dispositif selon la revendication 1, comportant quatre capteurs inertiels dont un premier capteur inertiel et un deuxième capteur inertiel sont positionnés sur le même axe, la classe de précision du premier capteur inertiel étant inférieure à la classe de précision du deuxième capteur inertiel.

5. Dispositif selon la revendication 1, comportant un emplacement pour le montage d'un premier capteur inertiel sur un des axes du repère et trois capteurs inertiels fixés selon les axes du repère, l'un des capteurs fixés formant un deuxième capteur inertiel monté sur le même axe que le premier capteur, la classe de précision du premier capteur inertiel étant inférieure à la classe de précision du deuxième capteur inertiel.

6. Dispositif selon la revendication 4 ou la revendication 5, dans lequel l'unité de commande comporte un module de filtrage pour mixer des signaux provenant au moins du premier capteur inertiel et du deuxième capteur inertiel.

7. Dispositif selon la revendication 4 ou la revendication 5, dans lequel le premier capteur inertiel et le deuxième capteur inertiel sont positionnés sur un axe vertical du repère.

## Patentansprüche

1. Trägheitsvorrichtung, umfassend
- eine Steuereinheit (3),
- eine Plattform (1),
mindestens drei Trägheitssensoren (2x, 2y, 2z, 2z'), die mit der Steuereinheit (3) verbunden und auf der Plattform (1) montiert sind, wobei die mindestens drei Trägheitssensoren (2x, 2y, 2z, 2z') jeweils mindestens eine empfindliche Achse haben, wobei die empfindlichen Achsen jeweils auf eine Achse eines Bezugssystems ausgerichtet sind, wobei jeder Sensor eine vorgegebene Genauigkeitsklasse hat, **dadurch gekennzeichnet, dass** sich die Genauigkeitsklassen von mindestens zwei der Sensoren voneinander unterscheiden.

2. Vorrichtung nach Anspruch 1, wobei die Trägheitssensoren Winkelsensoren sind.

3. Vorrichtung nach Anspruch 2, bei der, unter Berücksichtigung, dass eine der Achsen eine vertikale Achse ist, der Sensor mit der niedrigsten Genauigkeitsklasse auf der vertikalen Achse des Bezugssystems montiert ist.

4. Vorrichtung nach Anspruch 1, umfassend vier Trägheitssensoren, von denen ein erster Trägheitssensor und ein zweiter Trägheitssensor auf der gleichen Achse positioniert sind, wobei die Genauigkeitsklasse des ersten Trägheitssensors niedriger als die Genauigkeitsklasse des zweiten Trägheitssensors ist.

5. Vorrichtung nach Anspruch 1, umfassend eine Stelle für die Montage eines ersten Trägheitssensors auf einer der Achsen des Bezugssystems sowie drei gemäß den Achsen des Bezugssystems ortsfesten Trägheitssensoren, wobei einer der ortsfesten Sensoren einen zweiten Trägheitssensor bildet, der auf der gleichen Achse wie der erste Sensor montiert ist, wobei die Genauigkeitsklasse des ersten Trägheitssensors niedriger als die Genauigkeitsklasse des zweiten Trägheitssensors ist.

6. Vorrichtung nach Anspruch 4 oder Anspruch 5, bei der die Steuereinheit ein Filtermodul umfasst, um Signale zu mischen, die aus mindestens dem ersten Trägheitssensor und dem zweiten Trägheitssensor stammen.

7. Vorrichtung nach Anspruch 4 oder Anspruch 5, bei der der erste Trägheitssensor und der zweite Trägheitssensor auf einer vertikalen Achse des Bezugssystems positioniert sind.

## Claims

1. Inertial device including:
- a control unit (3),
- a platform (1),
at least three inertial sensors (2x, 2y, 2z, 2z') connected to the control unit (3) and being mounted on the platform (1), the at least three inertial sensors (2x, 2y, 2z, 2z') each having at least one sensitive axis, the sensitive axes each being aligned on an axis of a frame of reference, each sensor having a predetermined accuracy class, **characterized in that** that the accuracy classes of at least two of the sensors are different from one another.

2. Device according to claim 1, wherein the inertial sensors are angle sensors.

3. Device according to claim 2, wherein, one of the axes being a vertical axis, the lowest class accuracy sensor is mounted on the vertical axis of the frame of reference.

4. Device according to claim 1, including four inertial sensors of which a first inertial sensor and a second inertial sensor are positioned on the same axis, the accuracy class of the first inertial sensor being lower than the accuracy class of the second inertial sensor.

5. Device according to claim 1, including a location for the mounting of a first inertial sensor on one of the axes of the frame of reference and three inertial sensors fixed relative to the axes of the frame of reference, one of the fixed sensors forming a second inertial sensor mounted on the same axis as the first sensor, the accuracy class of the first inertial sensor being lower than the accuracy class of the second inertial sensor.

6. Device according to claim 4 or claim 5, wherein the control unit includes a filter module for mixing signals coming from at least the first inertial sensor and the second inertial sensor.

7. Device according to claim 4 or claim 5, wherein the first inertial sensor and the second inertial sensor are positioned on a vertical axis of the frame of reference.
